# EUROPEAN PATENT APPLICATION

(11) **EP 4 454 748 A1**
(43) Date of publication of application: **30.10.2024**
(21) Application number: 23170042.8
(22) Date of filing: 26.04.2023
(51) Int. Cl.: B01J 20/02, B01D 53/02, B01J 20/26, B01J 20/30, C02F 1/28

(54) **SWITCHABLE ADSORPTION MATERIALS BASED ON PUNICINES AND YLIDES FOR SELECTIVE SEPARATION AND RECYCLING OF METAL CATIONS AND METAL-CONTAINING ANIONS FROM COMPLEX SOLUTIONS**

(71) Applicant: Technische Universität Clausthal, 38678 Clausthal-Zellerfeld (DE)
(72) Inventor: SCHMIDT, Andreas, 38678 Clausthal-Zellerfeld (DE); OTTO, Christian, 37632 Eschershausen (DE); FISCHER, Axel Karl, 38106 Braunschweig (DE)
(74) Representative: Sonnenhauser, Thomas Martin

(57) **Abstract**

The present invention relates to the use of a polymer as adsorption material, characterised in that the polymer comprises one or more of the moieties represented by formula (1):

A-B (1)

, wherein the moieties can be the same or different,
wherein the moieties are covalently bonded via A and/or B to the polymer backbone or other parts of the polymer;
wherein A is
a) an aromatic group being substituted with one or more OH- and/or SH-groups, or
b) an aromatic group attached to B via a methylene group of the formula -[CH₂]- or a methylene carbanion group of the formula -[CH⁻]-, or
c) a 1,4-benzoquinone group or 1,4-naphthoquinone group being substituted in 2-position with the substituent being B and being substituted in 3-position with an OH group;

wherein B is
a pyridinium or benzoannelated pyridinium compound, wherein A is bonded to the nitrogen atom of the pyridinium or benzoannelated pyridinium compound. The present invention further relates to a metal complex or coordination compound comprising a metal-containing compound and said polymer, a method for selective separation of different types of metal cations and/or complex metal-containing anions using said polymer and polymerizable compounds useful for selective separation of different types of metal cations and/or complex metal-containing anions.

## Description

The present invention relates to polymers based on punicines and/or ylides, which can be used as switchable adsorption materials for selective adsorption of metal cations and metal-containing anions, in particular for purposes of purification and recycling, such as the separation of desired metal cations and metal-containing anions from complex solutions.

### Technical background

The majority of metals or heavy metals are technologically interesting or environmentally relevant. In the EU's list of critical raw materials, for example, the elements bismuth, silicon, cobalt, aluminum and palladium are listed. Iron, copper and zinc, but also nickel, are of great technological importance. However, the latter, together with caesium, chromium, mercury and arsenic, is an element of great environmental concern, as its release can cause considerable damage to the environment. In the Harz Mountains, zinc cation concentrations in streams and rivers are often too high as a result of centuries of mining; other metals are also very problematic here, depending on the hydrogeological situation. Retention or separation of this metal cation or others as close as possible to the source or tailings pile is therefore strongly advised. Separations of metal cations or heavy metal cations are not only necessary for the treatment of drinking water, wastewater or mine water. Rather, aqueous solutions also occur when natural ores or slags from recycling processes have been hydrometallurgically digested, whereby the contained metals have been converted into complex mixtures of various water-soluble cations and anions. Taking everything together is also necessary because other approaches must develop from the combination of environmental protection aspects and economic strategy considerations: Transferring critical raw materials into closed cycles and developing a circular economy is a major task of our time, especially since it also serves to decouple the European economy from geopolitical influences and, in the process, reduces the energy or material flows used for resource provision. However, the separation of specific metal cations from aqueous solutions containing a large number of cations and anions is difficult. Often the presence of one metal cation interferes with the separation of another.

Environmentally polluting heavy metals occur in water as cations, more rarely as complexed anions; they can be separated by various methods such as precipitation, ion exchange, electrolysis or ultrafiltration. The former method of precipitation is used primarily in wastewater treatment because the addition of a precipitant converts the heavy metal cations to an insoluble state and they can be filtered off or separated by settling. The heavy metals then precipitate, for example, as sparingly soluble carbonates or as sulfides and can be disposed of or recycled. Drinking water can be filtered to reduce any heavy metal cations, using ion exchangers or reverse osmosis systems. Here, pores in the membranes filter the water when a pressure is built up on one side of the membrane, which must be greater the smaller the pores are. This retains larger molecules and solid particles. Membrane adsorbers are also in use for drinking water. They contain special adsorption particles in the membrane and can remove lead from water, for example. They filter and bind in one step, so to speak. Activated carbon is often used to remove heavy metals from drinking water, wastewater and process water. The disadvantages here are the long contact times required for diffusion into the pores and the large quantities of activated carbon required in wastewater treatment plants, for example, which have special treatment basins. In addition, activated carbon can only be regenerated with high energy input. Large quantities of pollutant-laden material must therefore be disposed of annually.

In view of the above, there is a need for novel or more advanced approaches for the separation of specific metal cations. More specifically, separation approaches, which offer high selectivity, are particularly necessary when only one or at most a few selected metal cations are to be removed from complex compositions. To this end, switchable adsorption materials that can be adjusted to selectively and reversibly remove metal ions or heavy metal ions from aqueous solutions would be greatly advantageous, wherein the reversibility ensures that the corresponding metal cations are recovered after separation. In this way, the skilled person can conveniently adjust the separation externally, depending on the separation problem, by simply changing the pH and/or irradiating the aqueous solution with light (using specific light sources; or alternatively, work under light exclusion).

An example known in the state of the art which has not been used for selective separation and recycling of metal cations and metal-containing anions from complex solutions so far but shows switchability is called punicin (or punicine).

Albrecht et al. ["Pyridinium salts and ylides as partial structures of photoresponsive Merrifield resins", Journal of Materials Chemistry 2010, 20, 3025 - 3034.] discloses punicine and (pyridinium) ylide functionalized carrier polymers (based on Merrifield resins) and their light-induced (reversible) switchability and color change.

Schmidt et al. ["Studies on photocatalytically active materials containing structure elements of a pyridinium alkaloid from Punica granatum", Journal of Materials Chemistry 2007, 17, 2793 - 2800.] discloses polymeric punicines and merrifield resins functionalized with punicin and their photocatalytic activity.

Zhang et al. ["Sunlight-assisted tailoring of surface nanostructures on single-layer graphene nanosheets for highly efficient cation capture and high-flux desalination", Carbon 2020, 161, 674 - 684.] discloses the light-stimulated/-assisted adsorption of Fe³⁺ ions from water.

WO 1996011056 A1 discloses functionalized Merrifield resins and the removal of Co, Cu, Fe, Ni, Hg, Zn, Ag, Cd, Cr, and Al cations from liquids using grafted, substituted polyazacycloalkanes.

Shibata et al. ["Flotation separation of SiC from wastes in the silicon wafer slicing process", Kagaku Kogaku Ronbunshu 2006, 32, 93 - 98.] discloses a phase-selective separation, wherein SiO₂ is the gangue material.

### Summary of invention

The present inventors have surprisingly found that switchable polymers based on punicin or its derivatives and similar compounds such as pyridinium ylides can advantageously be used for metal ion separation. To the knowledge of the inventors, such switchable adsorption materials for selective separation of metal cations based, are as yet unknown. Thus, the concept of using these switchable adsorption materials based on punicines/pyridinium ylides for selective separation of metal cations has been developed by the present inventors.

An example for a compound showing the favorable switchable properties is punicine (N-(2',5'-dihydroxyphenyl)pyridinium), which has the following formula in one of its zwitterionic tautomeric forms:

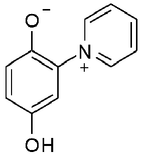

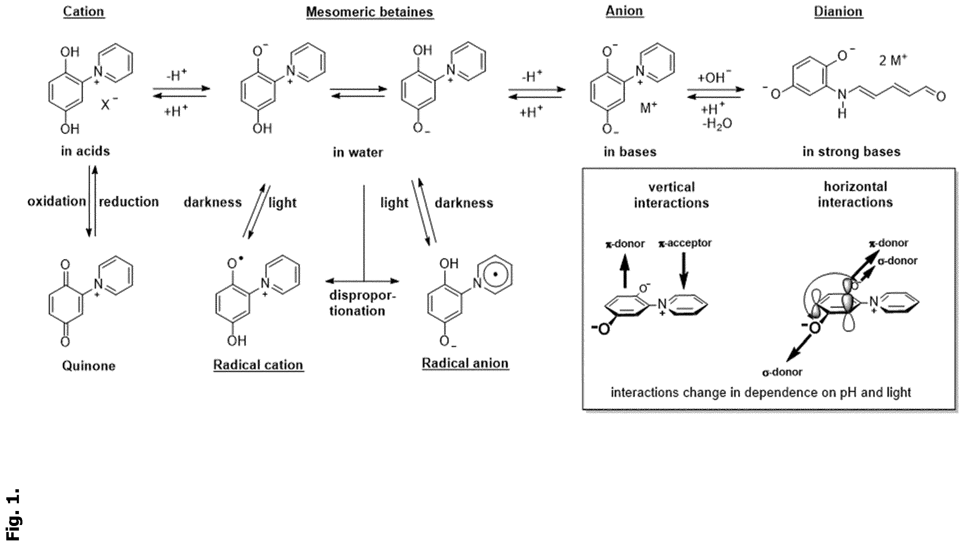

Although known for some time, in 2005 further research was conducted on this natural product, and it was named "punicin" (or "punicine") after its origin. Among other things, its properties under the influence of different pH values, its pH-switchability, were investigated [A. Schmidt, T. Mordhorst, M. Nieger, "Investigation of a betainic alkaloid from Punica granatum", Natural Product Research 2005, 19, 541 - 546]. According to this, punicin is present in acids, as a cation, but in the neutral in the form of two betaines (zwitterions), which differ as tautomers in their conjugation type. In the basic environment, punicin is completely deprotonated and thus exists as an anion (see Figure 1). Under the influence of strong bases, ring opening finally occurs to form a 2-fold negatively charged species, a dianion. This reaction or the deprotonations are reversible; in acid, the cation reconstitutes itself.

In addition to that, punicin has radical components that are formed especially under light irradiation. Depending on the substitution pattern of the punicin in the form of its derivatives or when punicin derivatives are attached to polymers, the radicals formed are stable ("persistent radicals"). The process of radical formation is also reversible causing its light switchability. Thus, punicin and punicin derivatives are molecules reversibly switchable by pH and light. Besides, punicines are also robust, stable and can be produced in large quantities at low cost. In addition, they can be varied structurally in a simple manner and can thus be functionalized and tailored in terms of their switchability. Polymers functionalized with punicin and its derivatives have also been prepared and characterized with regard to their switchability. The synthesis of punicin derivatives and polymers has been published, for example, in the following documents:
- C. F. Otto, M. Liu, C. Herzberger, J. C. Namyslo, M. Nieger, E. G. Hübner, F. Lederle, T. Freese A. Schmidt, "Borane adducts of punicine and of its dehydroxy derivatives (pyridinium-1-yl)-2- and 3-phenolates", Tetrahedron 2020, 76, 131627;
- M. Albrecht, M. Gjikaj, A. Schmidt, "Switchable pi-Complexes of Punicine Derivatives", Tetrahedron 2010, 66, 7149 - 7154;
- M. Albrecht, M. Yulikov, T. Kohn, G. Jeschke, J. Adams, A. Schmidt, "Pyridinium Salts and Ylides as Partial Structures of Photoresponsive Merrifield Resins", J. Mater. Chem. 2010, 20, 3025 - 3034;
- M. Albrecht, O. Schneider, A. Schmidt, "Redox Active Donor-substituted Punicine Derivatives", Org. Biomol. Chem. 2009, 7, 1445 - 1453;
- A. Schmidt, M. Albrecht, "Photocatalytically Active Materials with Pyridinium-Enolate Partial Structures", Z. Naturforsch. 2008, 63b, 465 - 472;
- A. Schmidt, M. Albrecht, T. Mordhorst, M. Topp, G. Jeschke, "Photocatalytically Active New Materials Containing Radical Structure Elements of a Pyridinium Alkaloid from Punica granatum", J. Mater. Chem. 2007, 17, 2793 - 2800;
- A. Schmidt, M. Topp, T. Mordhorst, O. Schneider, "Redoxactive Derivative of the Betaine-Alkaloid Punicin from Punica granatum. Synthesis and Cyclovoltammetry", Tetrahedron 2007, 63, 1842 - 1848;
- H. Fleischhauer, L. Frormann, A. Schmidt, "Vom Pflanzeninhaltsstoff zum Polymer. Neue Eigenschaften nach dem Vorbild der Natur. Teil 1", Int. Mag. Extrusion 2005, 5 (11), 50 - 51.;
- A. Schmidt, T. Mordhorst, H. Fleischhauer, G. Jeschke, "Coupled Photocatalytic Electron-Transfers with Derivatives of a Betaine Alkaloid from Punica granatum", ARKIVOC, 2005, X, 150 - 164;
- A. Schmidt, T. Mordhorst, M. Nieger, "Investigation of a Betainic Alkaloid from Punica granatum", Nat. Prod. Res. 2005, 19, 541 - 546;
- A. Schmidt, T. Mordhorst, Conjugated, "Cross-Conjugated, and Pseudo-Cross-Conjugated Derivatives of a Pyridinium Alkaloid from Punica granatum", ARKIVOC 2003, XIV, 233 - 245.

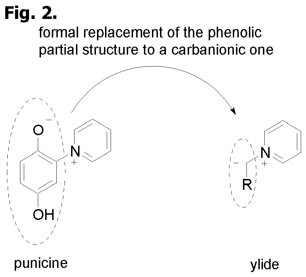

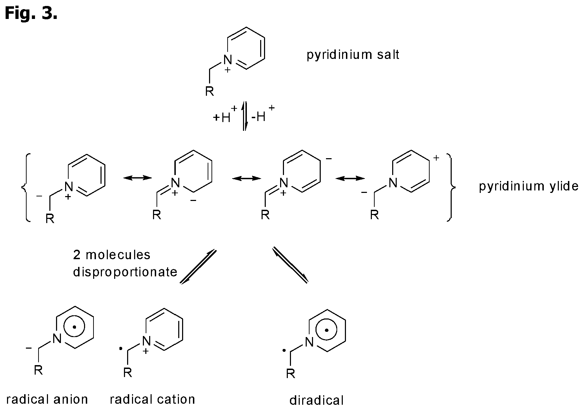

In continuation of this work, the inventors found that (hetarenium) ylides are similarly switchable. In such ylides, the phenolate residue of the punicin is formally replaced by a carbanion (see Figure 2). The switchability of such ylides is based on principles similar to those described for punicin: From a pyridinium salt (or in general: "hetarenium salt") a proton can be split off in α-position to the nitrogen atom (see Figure 3). The resulting ylide (a special form of a zwitterion) can delocalize both charges and is therefore stabilized. Under the influence of light, they form either radical anions and radical cations or, within a single molecule, a diradical. The formation of radical species from suitable ylidic precursors is noticeable in sunlight by intense blue coloration of the materials, which spontaneously disappears again when the light intensity is reduced (e.g. in cloudy conditions).

In experiments the inventors found that polymers functionalized punicins and ylides spontaneously form characterizable complexes with various metal cations. Exemplary structures of two of these polymers are shown the following formula: 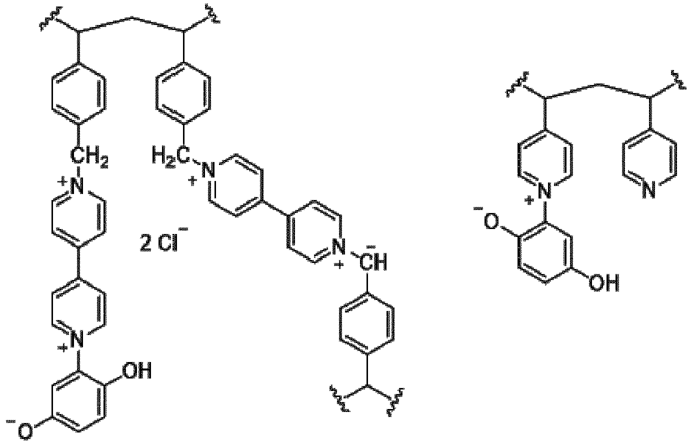 While the polymer shown on the left is the idealized structure of a modified Merrifield resin having ylide and punicin building blocks as well as 4,4'-bipyridinium moieties as cross-linkers, the polymer shown on the right is the idealized structure of a polymeric punicin based on poly(4-vinyl)pyridine with varying numbers of unsubstituted pyridine rings (shown here: 1:1). Advantages for applications such as metal ion separation are that the polymers are sparingly soluble, so that the punicin and ylide functional units can be installed on surfaces of insoluble resins or components as supports. These rather unknown materials can be used to induce light-controlled selective adsorption of metal cations from complex mixtures on the polymer surfaces, thus providing effective separation effects via switchability.

Considering the large variety of metals used in technical equipment today, switchable adsorption materials based on punicines and related compounds such as ylides offer new possibilities for the selective removal of metal cations from solutions produced by dissolving recycled materials or, conversely, the selective enrichment of metal cations in solution by removing unwanted ones. Furthermore, these adsorptive materials can be applied in water purification to remove harmful metal cations.

The present invention is therefore directed to the use of a polymer as adsorption material, in particular for the adsorption of metal cations and/or metal-containing anions, characterised in that the polymer comprises one or more of the moieties represented by formula (1):

A-B (1)

, wherein the moieties can be the same or different,
wherein the moieties are covalently bonded via A and/or B to the polymer backbone or other parts of the polymer;
wherein A is
   a) an aromatic group being substituted with one or more OH- and/or SH-groups, preferably A is attached to B via a bond of B to an aromatic ring of A, or
   b) an aromatic group attached to B via a methylene group of the formula -[CH₂]- or a methylene carbanion group of the formula -[CH⁻]-, or
   c) a 1,4-benzoquinone group or 1,4-naphthoquinone group being substituted in 2-position with the substituent being B and being substituted in 3-position with an OH group;
wherein B is
   a pyridinium or benzoannelated pyridinium compound, wherein A is bonded to the nitrogen atom of the pyridinium or benzoannelated pyridinium compound.

The present invention is further directed to a metal complex or coordination compound comprising a metal-containing compound and the polymer of the invention.

The present invention is further directed to a method for selective separation of different types of metal cations and/or complex metal-containing anions comprising the steps of:
a) providing an aqueous solution comprising different types of metal cations and/or metal-containing anions;
b) treating the solution of step a) with the polymer of the invention to adsorb at least a portion of at least one type of said different types of metal cations and/or complex metal-containing anions, preferably by forming the metal complex or coordination compound of the invention;
c) separation of the polymer having adsorbed said at least one type of different types of metal cations and/or complex metal-containing anions from the aqueous solution, preferably by forming the metal complex or coordination compound of the invention.

The present invention is further directed to polymerizable compound represented by formula (8):

D-E (8)

wherein D is represented by formula (9) or by formula (10): 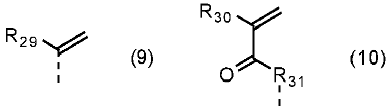
, wherein the dotted line represents the bond to E,
wherein R₂₉ = H or R₂₉ is a methyl group,
wherein R₃₀ = H or R₃₀ is a methyl group
wherein R₃₁ is O or NH,
wherein E is represented by formula (11) 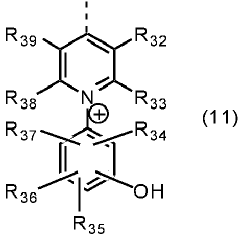
, wherein the dotted line represents the bond to D,
wherein R₃₂, R₃₃, R₃₄, R₃₅, R₃₆, R₃₇, R₃₈, R₃₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups.

### Detailed description of the invention

The present invention refers to the use of a polymer as adsorption material, characterised in that the polymer comprises one or more of the moieties represented by formula (1):

A-B (1)

The moieties can be the same or different, and the moieties are covalently bonded via A and/or B to the polymer backbone or other parts of the polymer. In formula (1) A is an aromatic group being substituted with one or more OH- and/or SH-groups, preferably A is attached to B via a bond of B to an aromatic ring of A, or an aromatic group attached to B via a methylene group of the formula -[CH₂]- or a methylene carbanion group of the formula -[CH⁻]-, or a 1,4-benzoquinone group or 1,4-naphthoquinone group being substituted in 2-position with the substituent being B and being substituted in 3-position with an OH group. In formula (1) B is a pyridinium or benzoannelated pyridinium compound, wherein A is bonded to the nitrogen atom of the pyridinium or benzoannelated pyridinium compound.

As set forth, the resulting structure of the moieties leads to structural units comprised by the polymer, which possess a punicin structure or an ylide structure besides pyridinio-benzoquinonolate or pyridinio-naphthoquinonolate structures. All of these structures show a switchability towards stimuli such as pH, light irradiation or even a combination thereof. The resulting polymeric structures are stable and can be prepared comparatively easily on a large scale and at low cost, for example, by reaction of commercially available poly(4-vinylpyridine) with either
- 1,4-benzo-/1,4-naphtho-quinone (yielding the punicines), or
- benzyl halides (yielding the yildes), or
- respective perhalogenated derivatives of 1,4-benzo-/1,4-naphtho-quinones (yielding the pyridinio-quinonolates).

The respective polymeric structures are comprising one or more of these moieties, i.e. punicines, yildes or pyridinio-quinonolates, and furthermore, the moieties can be the same or different. As a result, polymers comprising at the same time, for example, one or more punicin moiety in combination with one or more yilde moiety and in combination with one or more pyridinio-quinonolate moiety are encompassed by the invention.

A combination of these polymeric structures with metal cations or metal-containing anions leads to stable metal complexes or coordination compounds depending on the pH and the light irradiation/exclusion applied. Furthermore, the reversibility of the switchability allows for regeneration of previously complexed metal cations through re-release.

The term "adsorption" as used herein refers to the process whereby atoms, ions or molecules are trapped or retained on the surface of a material. More specifically, the term "adsorption" means a chemical adsorption or a physical adsorption. The chemical adsorption is accompanied by a chemical bond (such as a covalent bond, an ionic bond, a metallic bond, a coordination bond and a hydrogen bond) between an adsorbate and an adsorbent. Here, the adsorbate is a metal cation or a metal-containing anion, and the adsorbent is the polymeric material, i.e. the switchable adsorption material, of the invention based on, e.g., punicines or ylides. On the other hand, in the physical adsorption, a chemical bond is not formed between an adsorbate and an adsorbent, and a reversible adsorption is caused by physical van der Waals force and the like.

The term "polymer" as used herein will be understood to mean a molecule that encompasses a backbone (also referred to as "main chain") of one or more distinct types of repeat units (the smallest constitutional unit of the molecule) and is inclusive of the commonly known terms "oligomer", "copolymer", "homopolymer", "block copolymer" and the like. The term is also inclusive of polymers of diverse architectures such as linear, branched, grafted, cyclic, or crosslinked. Further, it will be understood that the term polymer is inclusive of, in addition to the polymer itself, residues from initiators, catalysts and other elements attendant to the synthesis of such a polymer, where such residues are understood as not being covalently incorporated thereto. Further, such residues and other elements, while normally removed during post polymerization purification processes, are typically mixed or co-mingled with the polymer such that they generally remain with the polymer when it is transferred between vessels or between solvents or dispersion media. The term polymer does also encompass a polymer mixture including a polymer as defined in more detail, wherein this polymer is preferably the main component of the mixture. The switchable adsorption material of the invention may also encompass a mixture of a non-functionalized (carrier) polymer and a switchable (low-molecular) compound based on punicines, yildes or pyridinio-quinonolates, wherein the switchable compound may be bonded to the polymer by means of adsorption.

Preferably, the polymers of the invention are not water-soluble and the switchable moieties are covalently bonded to the polymer. The respective adsorption materials can be added to the solutions, e.g., as granules or resin particles to be filtered off after complexation of the desired metal cations. The particles can have, for example, a size of D95 = 0.05-5 mm, such as 0.05-1 mm or 0.05-0.5 mm which can e.g., be determined by using a volumetric dynamic laser light scattering method, preferably by using an instrument of Malvern Instruments, Ltd., Malvern, UK, preferably a Mastersizer. The switchability of the punicins, ylides and pyridinio-quinonolates being immobilized on insoluble support materials, allows adjustment of the metal cations targeted for selective separation from complex mixtures. In the case of adsorption materials being water-soluble polymers, alternative separation methods such as filtration are to be applied, such as dialysis, for example.

As used herein "switchable" refers to compounds which have properties which can be changed by the environment (i.e. external parameters), such as by changing the pH, changing the oxidation state, temperature and by irradiating with light. In this context, "switching the polymer" or "to switch the polymer" means stimulating said polymer, e.g., by light irradiation/exclusion or by pH change, thereby changing the properties of said polymer, which in turn changes the selectivity for the target to be separated.

By using switchable compounds, the skilled person can conveniently set the parameters of the separation to meet the requirements for purification of the desired metal cations and metal-containing anions. Depending on the separation requirements, the separation conditions and properties of the adsorption materials can, for example, be set by changing the pH and/or by irradiating the respective aqueous solution with light (using specific light sources; or alternatively, work under light exclusion).

The term "bonded" refers to having at least one of covalent bonding, hydrogen bonding, ionic bonding, Van der Waals interactions, pi interactions, London forces, or electrostatic interactions.

The moieties represented by formula (1) are covalently bonded via A and/or B to the polymer backbone or other parts of the polymer. To stay with the example mentioned above, the product of the reaction of poly(4-vinylpyridine) with quinones/benzyl halides/perhalogenated quinones would lead to a polymer, wherein the moieties are covalently bonded to the polymer backbone via B, i.e. via a 4-pyridinium compound. Accordingly, for example a reaction of poly(vinylbenzyl chloride) with pyridine would lead to a polymer, wherein the moieties (in this case ylides) are covalently bonded to the polymer backbone via A, i.e. via a benzyl group (an aromatic group attached to B via a methylene group). In this way, a potential reaction of poly(4-vinylpyridine) with poly(vinylbenzyl chloride) would lead to a crosslinked polymer, wherein the moieties (in this case ylides again) are covalently bonded to the polymer backbone via A and B.

The aromatic group is substituted with at least one OH- or SH-group. The at least one OH- or SH-group may be in meta-position with respect to the substituent being B. Preferably, the aromatic group is substituted with at least two OH- or SH-groups or with at least one OH-group and with at least one SH-group in ortho-, meta- or para-position to each other; or more of these groups up to the maximum number of possible substituted sites.

The term "aromatic group" as used herein refers to groups having aromaticity, namely having a conjugated ring of unsaturated bonds or ion pairs of electrons and satisfying the Hückel's rule which states that an aromatic system should have 4n + 2 π-electrons, where n is an integer ≥ 0. Said aromatic group includes aryl and heteroaryl groups. The aromatic group may be substituted or unsubstituted. The aromatic group includes both single-ring aromatic hydrocarbyl groups and polycyclic aromatic ring systems. The polycyclic rings may have two or more rings in which two carbons are common to two adjoining rings (the rings are "fused") wherein at least one of the rings is an aromatic hydrocarbyl group, e.g., the other rings can be cycloalkyls, cycloalkenyls, aryl, heterocycles, and/or heteroaryls.

The term "methylene" as used herein refers to a divalent -CH₂- group present in an alkyl or alkylene moiety.

The term "carbanion" refers to a trivalent carbon atom bearing a formal negative charge as an open valence position.

The term "substituted" with respect to groups such as electron-donating or alkyl/alkene/alkyne groups as used herein refers to groups, wherein one or more hydrogen atoms are replaced by different atoms or groups such as halogens (e.g. Cl, Br, I, F), amines (primary, secondary, tertiary), sulphates, phosphates, ethers, esters, OH, SH, CF₃, CN, (unsubstituted) C₁₋₄ alkyl, C₁₋₄ heteroalkyl, C₆₋₁₄ aryl and C₄₋₁₂ heteroaryl groups etc.

The term "unsubstituted" with respect to groups such as electron-donating or alkyl/alkene/alkyne groups as used herein refers to groups, wherein no hydrogen is replaced by a different atom or group. That is, the term unsubstituted alkyls as used herein includes methyl, ethyl, propyl etc.

It is noted that not all hydrogen atoms are shown in the formulas throughout the application. Furthermore, any atom in the general formulas can be substituted by any of its isotopes. That is, any hydrogen atom can be substituted by deuterium D.

Furthermore, any carbon atom in the disclosed and/or claimed compounds can be substituted (partially or fully) by any of its isotopes, preferably ¹³C. Furthermore, any nitrogen atom in the disclosed and/or claimed compounds can be substituted (partially or fully) by ¹⁵N. Furthermore, any oxygen atom in the disclosed and/or claimed compounds can be substituted (partially or fully) by ¹⁷O. Furthermore, any phosphor atom in the disclosed and/or claimed compounds can be substituted (partially or fully) by ³¹P.

The term "pyridinium" as used herein, refers to the cationic form of pyridine.

The term "annelated" means a ring system that when viewed is either annelated with another ring at the carbon atom(s) of the ring system, or through a bond of the ring system, as is the case with fused or spiro ring systems.

According to a preferred embodiment of the present invention, A is represented by formulae (2), (3), (4) or (5): 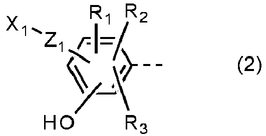 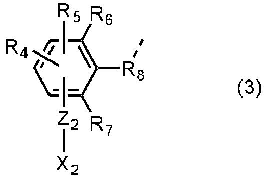 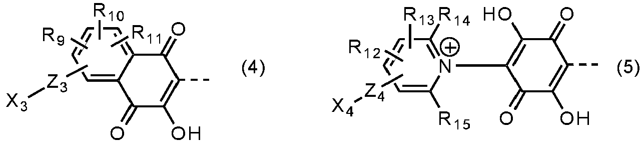
; wherein the dotted line represents the bond to B;
wherein R₁ is selected from: H, OH, SH, NH₂;
wherein R₂, R₃, R₄, R₅, R₆, R₇, R₉, R₁₀, R₁₁, R₁₂, R₁₃, R₁₄, R₁₅ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein R₈ = -[CH₂]- or R₈ = -[CH⁻]-;
wherein Z₁, Z₂, Z₃, Z₄ represents a single bond or a linker;
wherein X₁, X₂, X₃, X₄ can be the same as or different from R₂, R₃, R₄, R₅, R₆, R₇, R₉, R₁₀, R₁₁, R₁₂, R₁₃, R₁₄, R₁₅ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups, or X₁, X₂, X₃, X₄ can be the polymer backbone.

Formula (2) represents compounds having the punicin structure with at least one OH-group, i.e. A is the aromatic group being substituted with one or more OH- and/or SH-groups. The OH-group may be deprotonated depending on the pH-value. In case of A being represented by formula (2), A is directly bonded/attached to B. Formula (3) represents compounds having an ylide structure, i.e. A is the aromatic group attached to B via a methylene group of the formula -[CH₂]- or a methylene carbanion group of the formula -[CH⁻]-. In case of A being represented by formula (3), A is bonded/attached to B via the methylene group or methylene carbanion group of claim 1. R₈ represents the methylene group of the formula -[CH₂]- or methylene carbanion group of the formula -[CH⁻]- of claim 1. R₈ may be -[CH₂]- or - [CH⁻]- depending on the pH-value. Formulae (4) and (5) represent compounds having a 1,4-benzo-/1,4-naphtho-quinonolate structure. The OH-group(s) may be deprotonated depending on the pH-value.

The term "bond" or "single bond" refers to a chemical bond between two atoms, or two moieties when the atoms joined by the bond are considered to be part of a larger substructure.

R₁ as well as R₂, R₃, R₄, R₅, R₆, R₇, R₉, R₁₀, R₁₁, R₁₂, R₁₃, R₁₄, R₁₅ also include the corresponding deprotonated forms as well as salt forms with monovalent metal cations of the groups representing R₁ as well as R₂, R₃, R₄, R₅, R₆, R₇, R₁₀, R₁₁, R₁₂, R₁₃, R₁₄, R₁₅. These protonated forms appear depending on the pH value. This pH-dependent behaviour in turn enables selectivity in the separation of metal cations and metal-containing anions. The switchable properties of the punicins/ylides/pyridinio-quinonolates are transferred to the properties of potential functional groups substituting the aromatic group. In this way, adsorption materials according to the invention are obtained, which are switchable by light and pH. The basis is their molecular structure which allows to adjust the electronic properties and thus interactions (such as σ- and n-interactions) with ions, surfaces or even organic molecules over a wide range by light and the pH-value. The properties of the adsorption material can thus be tailored to the particular separation problem by the light scenario in interaction with the pH value. Switchable adsorption materials based on punicins/ylides/pyridinio-quinonolates as molecular switches are new.

The term "alkyl" as used herein refers to straight chain/linear, or branched hydrocarbon substituents, preferably having 1 to 20, or 1 to 10 carbon atoms. Examples of alkyl groups include methyl, ethyl, propyl, butyl, isopropyl, sec-butyl, isobutyl, tert-butyl.

The term "aryl" refers to and includes both single-ring aromatic hydrocarbyl groups and polycyclic aromatic ring systems. The polycyclic rings may have two or more rings in which two carbons are common to two adjoining rings (the rings are "fused") wherein at least one of the rings is an aromatic hydrocarbyl group, e.g., the other rings can be cycloalkyls, cycloalkenyls, aryl, heterocycles, and/or heteroaryls. Preferred aryl groups are those containing six to thirty carbon atoms, preferably six to twenty carbon atoms, more preferably six to twelve carbon atoms. Especially preferred is an aryl group having six carbons, ten carbons or twelve carbons. Suitable aryl groups include phenyl, biphenyl, triphenyl, triphenylene, tetraphenylene, naphthalene, anthracene, phenalene, phenanthrene, fluorene, pyrene, chrysene, perylene, and azulene, preferably phenyl, biphenyl, triphenyl, triphenylene, fluorene, and naphthalene. Additionally, the aryl group is optionally substituted.

As used herein, the term "heteroalkyl" refers to an alkyl group as described herein in which one or more carbon atoms is replaced by a heteroatom. Suitable heteroatoms include oxygen, sulfur, nitrogen, phosphorus, and the like. Examples of heteroalkyl groups include, but are not limited to, alkoxy, amino, thioester, polyethylene glycol), and alkyl-substituted amino.

The term "heteroaryl" refers to and includes both single-ring aromatic groups and polycyclic aromatic ring systems that include at least one heteroatom. The heteroatoms include, but are not limited to O, S, N, P, B, Si, and Se. In many instances, O, S, or N are the preferred heteroatoms. Hetero-single ring aromatic systems are preferably single rings with 5 or 6 ring atoms, and the ring can have from one to six heteroatoms. The hetero-polycyclic ring systems can have two or more rings in which two atoms are common to two adjoining rings (the rings are "fused") wherein at least one of the rings is a heteroaryl, e.g., the other rings can be cycloalkyls, cycloalkenyls, aryl, heterocycles, and/or heteroaryls. The hetero-polycyclic aromatic ring systems can have from one to six heteroatoms per ring of the polycyclic aromatic ring system. Preferred heteroaryl groups are those containing three to thirty carbon atoms, preferably three to twenty carbon atoms, more preferably three to twelve carbon atoms. Suitable heteroaryl groups include dibenzothiophene, dibenzofuran, dibenzoselenophene, furan, thiophene, benzofuran, benzothiophene, benzoselenophene, carbazole, indolocarbazole, pyridylindole, pyrrolodipyridine, pyrazole, imidazole, triazole, oxazole, thiazole, oxadiazole, oxatriazole, dioxazole, thiadiazole, pyridine, pyridazine, pyrimidine, pyrazine, triazine, oxazine, oxathiazine, oxadiazine, indole, benzimidazole, indazole, indoxazine, benzoxazole, benzisoxazole, benzothiazole, quinoline, isoquinoline, cinnoline, quinazoline, quinoxaline, naphthyridine, phthalazine, pteridine, xanthene, acridine, phenazine, phenothiazine, phenoxazine, benzofuropyridine, furodipyridine, benzothienopyridine, thienodipyridine, benzoselenophenopyridine, and selenophenodipyridine, preferably dibenzothiophene, dibenzofuran, dibenzoselenophene, carbazole, indolocarbazole, imidazole, pyridine, triazine, benzimidazole, 1,2-azaborine, 1,3-azaborine, 1,4-azaborine, borazine, and aza-analogs thereof. Additionally, the heteroaryl group is optionally substituted.

As used herein, the term "halogen" or "halo" refers to fluorine (fluoro), chlorine (chloro), bromine (bromo) or iodine (iodo), preferably fluorine, chlorine or bromine.

The term "negative charge" when describing the compounds denotes that there are free electrons in the molecule to the extent that there is one unit of an electric charge resulting.

The term "linker", as used herein, refers to a chemical entity linking at least two other entities together. Typically, a linker uses covalent bonding. Typically, a linker is composed from a number of 1 to 10 atoms forming the backbone of the linker. The linker provides spacing between the two molecules or moieties such that they are able to function in their intended manner. For example, the linker is a spacer comprising at least one linear or branched structural unit comprising the formula - (C(R'R"))ₙ- wherein R'and R" are, independently from each other, a hydrogen or a residue selected from the group consisting of, optionally substituted, alkyl, aryl, arylalkyl, and alkylaryl.

The term "polymer backbone," "oligomer backbone", or "backbone" as used herein refers to that portion of the polymer or oligomer which is a continuous chain comprising the bonds formed between monomers upon polymerization. The composition of the polymer or oligomer backbone can be described in terms of the identity of the monomers from which it is formed without regard to the composition of branches, or side chains, of the polymer or oligomer backbone.

According to a preferred embodiment of the present invention, B is represented by formula (6): 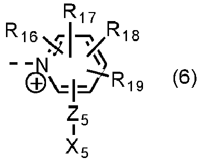
; wherein the dotted line represents the bond to A;
wherein R₁₆, R₁₇, R₁₈, R₁₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein Z₅ represents a single bond or a linker;
wherein X₅ can be the same as or different from R₁₆, R₁₇, R₁₈, R₁₉ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups, or X₅ can be the polymer backbone of the polymer, wherein said polymer backbone may be the same as, or different from, the polymer backbone represented by X₁, X₂, X₃, X₄.

Formula (6) represents the pyridinium structure, which is present in all switchable moieties comprised by the polymer being the adsorption material. In a preferred embodiment X₅ is the polymer backbone of the polymer, i.e. the moieties are covalently bonded to the polymer via B, and optionally the moieties are covalently bonded to the polymer backbone or other parts of the polymer via B and A.

In a preferred embodiment of this invention, Z₅ is a single bond. In a further preferred embodiment of this invention Z₅ has the following formula: 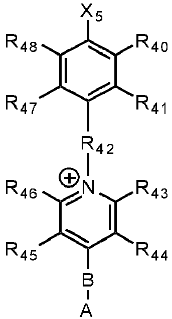
, wherein A, B, X₅ are defined as above,
wherein R₄₀, R₄₁, R₄₃, R₄₄, R₄₅, R₄₆, R₄₇, R₄₈ are are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
wherein R₄₂ = -[CH_{2]}- or R₄₂ = -[CH⁻]-.

In a particularly preferred embodiment of this invention, the moieties comprised by the polymer have the following formulae: 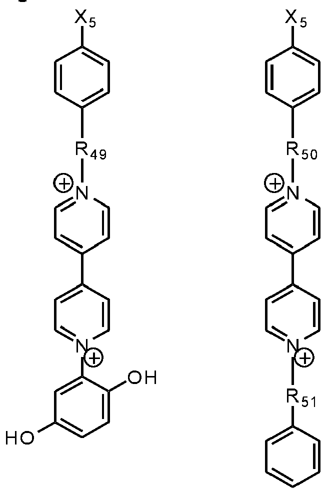 , wherein X₅ is the polymer backbone of the polymer, R₄₉ = -[CH_{2]}- or R₄₉ = -[CH⁻]-depending on the pH-value, R₅₀ = -[CH₂]- or R₅₀ = -[CH⁻]- depending on the pH-value, R₅₁ = -[CH₂]- or R₅₁ = -[CH⁻]- depending on the pH-value.

According to a preferred embodiment of the present invention, X₅ is the polymer backbone, and
a) Z₁, Z₂, Z₃, Z₄, Z₅ represent a single bond, and X₁, X₂, X₃, X₄ is H;
   or
b) A is defined as in formula (3) of claim 2,

Z₂ represents a single bond, X₂ = X₅,
Z₅ is represented by formula (7) wherein the symbols B and X₅ have been inserted into formula (7): 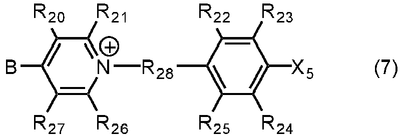
   , wherein R₂₀, R₂₁, R₂₂, R₂₃, R₂₄, R₂₅, R₂₆, R₂₇ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
   wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
   wherein R₂₈ = -[CH₂]- or R₂₈ = -[CH⁻]-,
   wherein B is as defined in claim 3.

In a particularly preferred embodiment of this invention, the moieties comprised by the polymer have the following formula: 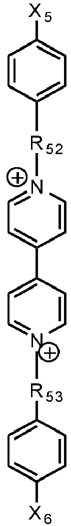
, wherein X₅ is the polymer backbone of the polymer, X₅ = X₆,
R₅₂ = -[CH₂]- or R₅₂ = -[CH-]- depending on the pH-value,
R₅₃ = -[CH₂]- or R₅₃ = -[CH⁻]- depending on the pH-value. R₃₂, R₅₃ may not be -[CH₂]- or -[CH⁻]- independently from each other. Rather, it depends on the pH value, whether one, two or no ylide structure is present in such a symmetrical structural fragment comprised by the polymer. It can be assumed that there is an equilibrium or mesomerism within the structure from which the charge distribution results. Such structures may be generated in a reaction of a poly(vinylbenzyl chloride) with 4,4'-bipyridine leading to such a symmetrical structural fragment comprised by the polymer. For example, a Merrifield resin can be used as the starting material, and subsequently, be functionalized with 4,4'-bipyridine yielding a modified Merrifield resin having ylide building blocks incorporated. Merrifield resins, which can be present in the form of beads, represent a favourable starting material in order to prepare the switchable adsorption materials of the invention since these resins are not soluble in aqueous solution and can conveniently - as being in the form of beads - be filtered off after having the metal cations and metal-containing anions trapped inside the adsorption material or on its surface. Of course, after having separated the beads, the trapped metal cations and metal-containing anions can be regenerated, i.e. released from the adsorption material in an analogous manner.

According to a preferred embodiment of the present invention, the polymer backbone is selected from the group consisting of saturated or unsaturated olefinic, styrenic, acrylic, methacrylic, acrylamide, methacrylamide, polyether, polyester, polyamide, polysiloxane polymer backbones or combinations thereof; preferably wherein the polymer backbone is a saturated olefinic polymer backbone.

In preferred embodiments of the invention, Z₁, Z₂, Z₃, Z₄, Z₅ are represented by a single bond, which may result in A and/or B being directly attached to the polymer backbone. In case of a combination (of Z₁, Z₂, Z₃, Z₄, Z₅ being represented by a single bond) with the preferred embodiment wherein the polymer backbone is a saturated olefinic polymer backbone, strictly speaking, the polymer backbone can then be considered to be both at the same time a saturated olefinic polymer backbone and a styrenic polymer backbone. This is caused by the fact that the combination of a saturated olefinic polymer backbone with an (hetero) aromatic group (as, e.g., represented by formulae (2) to (6)), necessarily leads to a styrenic polymer backbone (, i.e. a polystyrene or a polyvinylpyridine). However, since functionalized styrenic polymers are commercially available or synthetically easily accessible and can be used as starting materials for the preparation of the polymers of the invention, it is meaningful to make this distinction between a saturated olefinic polymer backbone and a styrenic polymer backbone. Accordingly, polymers with, e.g., an acrylic polymer backbone synthesized via functionalized acrylic polymers with A or B carrying reagents are also encompassed by this invention. Alternatively, the polymerization of functional monomers carrying A and/or B represent another synthesis strategy in order to access the polymers of the invention.

The present invention also refers to a metal complex or coordination compound comprising a metal-containing ion compound and a polymer as defined by formulas (1) to (7).

The polymers of the invention form in combination with metal-containing ion compounds (metal cations or metal-containing anions) stable metal complexes or coordination compounds. The formation of these metal complexes or coordination compounds depends on the solution pH and can be influenced by light irradiation/exclusion.

The term "metal complex" as used herein, refers to a coordination complex consisting of one or more central metal atoms or ions, which form one or more coordination centers, and a surrounding array of bound molecules or ions as ligands, which contain one or more pairs of electrons that can be shared with the metal. In a metal complex, the metal atoms or ions typically act as Lewis acids, whereas the ligands typically act as Lewis bases. Metal complexes can be neutral, positively charged, or negatively charged. Electrically charged metal complexes may be also called complex ions.

The term "coordination compound" refers to the central metal or metal ion coordinated by one or more connecting clusters of one or more connecting moieties by forming a coordinate bond with the central metal or metal ion.

The term "metal-containing compound" refers to positively charged, negatively charged and neutral compounds containing metal atoms and/or metal ions.

According to a preferred embodiment of the present invention, the metal-containing compound comprises a complex metal containing anion, preferably AsO₄³⁻, CrO₄²⁻, VO₄³, NbO₃⁻ and/or MnO₄⁻.

These complex metal-containing anions often occur in minerals, and it is a possible application of the invention to enrich not only various metal cations but also such complex metal containing anions from aqueous solutions that can be derived from minerals or other naturally occurring substances. The properties of the switchable moieties of the adsorption materials can be adjusted by the pH in such a way, that these moieties are converted into their fully protonated forms (i.e. cationic forms) in acidic environment, and into their fully deprotonated forms (i.e. neutral or anionic forms) in basic environment, whereas pH values between highly acidic and strongly basic induce the formation of partially protonated forms. Irradiation by light induces the reversible formation of radical species. Cationic, anionic, and radical forms of these switchable moieties of the adsorption materials display different adsorption and complex formation properties toward the different types of metal ions, so that a selectivity toward certain metal ions being of particular interest in complex metal ion solutions can be adjusted by pH and/or light irradiation or light exclusion.

The term "complex metal-containing anion" refers to a polyatomic ion which is negatively charged.

According to a preferred embodiment of the present invention, the metal-containing compound comprises a metal cation selected from the group consisting of alkali metals, alkaline earth metals, transition metals, post-transition metals, lanthanides, actinides, or combinations thereof;
preferably selected from the group consisting of lithium, cobalt, copper, gold, iron, mercury, nickel, zinc, silver, platinum, bismuth, cadmium, chromium, palladium, ruthenium, aluminum, gallium, the rare earth metals, or combinations thereof.

In principle, all metal cations are accessible to the invention or to the adsorption according to the invention. In particular, also critical raw materials and/or metals which are used today, for example, in technical devices and can be enriched or removed by means of this invention in recycling processes. The removal of harmful metal cations in water purification is also a possible application. Examples of such metal cations would be Co²⁺, Cu²⁺, Fe³⁺, Hg²⁺, Ni²⁺, Zn²⁺, Ag⁺, Bi³⁺, Cd²⁺, Cr³⁺, Pd²⁺, Al³⁺, Ga³⁺.

The present invention also refers to a method for selective separation of different types of metal cations and/or complex metal-containing anions comprising the steps of:
a) providing an aqueous solution comprising different types of metal cations and/or metal-containing anions;
b) treating the solution of step a) with the polymer as defined by formulas (1) to (7) to adsorb at least a portion of at least one type of said different types of metal cations and/or complex metal-containing anions, preferably by forming the metal complex or coordination compound of the invention;
c) separation of the polymer having adsorbed said at least one type of different types of metal cations and/or complex metal-containing anions from the aqueous solution, preferably by forming the metal complex or coordination compound of the invention.

The method refers to a treatment of complex solutions comprising different types of metal cations and/or metal-containing anions with the adsorption materials of the invention. This allows for selective adsorption of certain metal cations and/or metal-containing anions being of particular interest. Metal cations and/or metal-containing anions, which are not of particular interest, remain in the solution after the treatment. After isolating the polymeric adsorption materials having the metal cations and/or metal-containing anions of interest adsorbed from the solution (comprising the remaining metal cations and/or metal-containing anions), the selective separation is completed.

Step a) refers to providing an aqueous solution comprising different types of metal cations and/or metal-containing anions. This step may also include a conversion of originally solid, poorly soluble material mixtures into acid- or water-soluble compounds. For this purpose, the material mixture could already have been treated beforehand, e.g. by means of grinding (or treatment with acids or bases or a plasma treatment of the mineral, or other chemical as well as physical treatments).

Step b) refers to treating the solution of step a) with the polymers as defined in any of claims 1 to 5. This step may also include stirring or agitating the respective mixture in order to enable comprehensive treating of the solution of step a) with ideally complete adsorption of the metal cations and/or metal-containing anions of interest. In this context, it may also be useful to perform this step at a specific condition, such as a specific temperature and/or under inert or inert-like conditions.

In a preferred embodiment, step a) the total concentration of the aqueous solution comprising different types metal cations and/or metal-containing anions is in the range of 0.01 to 1000 mg/L, preferably in the range of 0.1 to 500 mg/L, particularly preferably in the range of 0.5 to 250 mg/L.

In a preferred embodiment, the treatment time in step b) is in the range of 0.5 h to 48 h, preferably in the range of 6 h to 36 h, particularly preferably in the range of 12 h to 24 h.

In a further preferred embodiment, step b) is performed by stirring the aqueous solution comprising metal cations and/or metal-containing anions with the polymers.

Step c) refers to the separation of the polymers, which ideally have adsorbed the metal cation(s) and/or metal-containing anion(s) of interest completely or at least a part, from the aqueous solution containing consequently residual ions or other compounds remaining in the solution after separation. Since the polymers are mainly water-insoluble polymers, methods such as filtration, decantation or centrifugation are particularly suitable for separating the polymers in the context of the present invention. In case of water-soluble polymers are used as adsorption material for this invention, methods such as dialysis or asymmetrical flow field-flow fractionation (AF4) can be used. In addition, membrane filtration or chromatography processes are conceivable, for example, by preparing chromatography columns in the design of commercially available ion exchangers using the polymers of the present invention.

As a result of the separation conducted in step c), the ratio of the different types of metal cations and/or complex metal-containing anions changed in the solution if compared to the ratio of the different types of metal cations and/or complex metal-containing anions of the solution provided in step a).

In a preferred embodiment, step c) is performed by filtration of the polymers.

According to a preferred embodiment of the present invention, in step a) the aqueous solution comprising different types of metal cations and/or metal-containing anions additionally contains silicate minerals as gangue materials, preferably wherein the silicate minerals having the chemical formula SiO₂.

Thus, the process according to the invention is also suitable for the processing of minerals (naturally occurring or artificially engineered minerals, e.g., from slags) containing critical raw materials.

As used herein, the term "mineral" (sometimes also referred to as "ore") refers to a substance or mixtures of substances that are solid inorganic, either naturally occurring, formed during recycling processes, or artificially engineered and, in the ideal case, representable by a chemical formula, which are usually abiogenic and may have an ordered atomic structure. Minerals can for example be (metal)oxides, (metal)sulfides, (metal)silicates, or native metals such as copper or gold. The ore mineral is different from a rock, which can be an aggregate of minerals and/or non-minerals. Examples of minerals include, but are not limited to, sulfides, oxides, halides, carbonates, sulfates, and phosphates of valuable metals. The term "mineral" is not restricted to materials obtained from mining, but includes minerals and salts from any other source such as from recycling processes of batteries such as lithium batteries.

The term "gangue" means the part of the material that is of little or no value (i.e. the impurity) and which needs to be separated from the materials such as from the minerals. Examples of gangue materials include, but are not limited to silicate minerals, preferably selected from the group consisting of SiO₂, gehlenite, pyrite, zincblende, galenite and combinations thereof.

According to a preferred embodiment of the present invention, step b) and step c) further comprise
i) performing light irradiation or light exclusion to switch the polymer; and/or
ii) increasing or decreasing the pH of the aqueous solution to switch the polymer.

It is possible to perform steps b) and c) of the method according to this embodiment in order to adsorb in a first cycle at least one type of different types of metal cations and/or complex metal-containing anions from the initial aqueous solution comprising different types of metal cations and/or metal-containing anions. Thereafter, steps b) and c) can be repeated in a second cycle to treat the remaining aqueous solution comprising different types of metal cations and/or metal-containing anions from the first cycle. In this second cycle, a different light irradiation/exclusion and/or pH-value (compared to the setting applied in the first cycle) can be applied in order to tailor the polymer to selectively adsorb different types of metal cations and/or complex metal-containing anions.

In this way, it is theoretically possible to separate a complex solution into its individual components. According to the invention, performing method steps b) and c) changes the relative proportions of the types of metal cations and/or complex metal-containing anions in the aqueous solution which allows the selective separation. When repeating methods steps b) and c), it is possible to either add a different type of polymer in order to separate a different type of metal cation and/or complex metal-containing anion or it is possible to add the same polymer while achieving a selective separation by usage of different process conditions such as with/without light.

In the process according to the invention, for example, the mixture of step b) contained in a reaction vessel could be irradiated from the outside with the aid of a specific light source. LED lamps or lasers of certain wavelengths would be suitable for this purpose, for example. It may also be possible to provide the reaction vessel with a specific light filter in order to exclude certain wavelength ranges of the light. Similar reaction vessels could also allow for the complete exclusion of light if desired. The irradiation of membranes or chromatography columns comprising the polymers of this invention with appropriate light sources during the process would be conceivable to the same extent.
Thus, in one embodiment, the polymer of the invention is in the form of a membrane.

Special pH buffer solutions, especially universal buffer solutions with a wide pH range such as McIlvaine's buffer, are suitable for adjusting the pH of the mixture of step b). This would make it possible, for example, to readjust the pH value during the process by adding small volumes of strong acids or bases. For example, if a first ion was already adsorbed by the polymer under specific conditions, altering the pH by adding acid or base could then allow for the adsorption of a second ion comprised by the solution, wherein at the same time a third ion could remain in the solution whereas the polymer carrying the first and the second ion would have to be separated from the solution.

In a preferred embodiment, step b) and step c) further comprising
a) performing light irradiation to switch the polymer, wherein the illuminance is > 5 000 lux, preferably > 10 000 lux, particularly preferably > 50 000 lux and the wavelength of the irradiated light is in the range from 10 nm to 1400 nm, preferably in the range of 200 nm to 700 nm, particularly preferably in the range of 200 nm to 700 nm, or
   light exclusion, wherein the illuminance is < 500 lux, preferably < 100 lux, particularly preferably < 40 lux; and/or
b) increasing or decreasing the pH, preferably at a pH within a pH range from pH = 1 to pH = 12, particularly preferably at a pH within a pH range from pH = 2 to pH = 11.

According to a preferred embodiment of the present invention, the light irradiation or light exclusion and/or the pH is set depending on the type of metal cations and/or metal-containing anions to be adsorbed by the polymer.

In order to remove the cations of Cu, Fe, Hg, Ag, Bi, Cr, and Pd from an aqueous solution containing the cations Cu, Fe, Hg, Ag, Bi, Cr, Pd, Co, Ni, Zn, Si, Al and Li, the punicin-derived polyvinylpyridine, suspended in water, was adjusted to pH 8 by diluted aqueous NaOH, stirred with the aforementioned metal cation solution at room temperature in the dark (< 40 lux) over a period of 24 h, and filtered off.

In order to remove 80% Cd cations from an aqueous solution containing the cations Cu, Fe, Hg, Ag, Bi, Cr, Pd, Co, Ni, Zn, Si, Al and Li, the punicin-derived polyvinylpyridine, suspended in water, was adjusted to pH 8 by diluted aqueous NaOH, stirred with the aforementioned metal cation solution at room temperature in daylight / artificial room light (> 5000 lux; 3300-5300 K) over a period of 24 h, and filtered off.

In order to quantitatively remove the cations of Hg, Ag, Bi, and Pd from an aqueous solution containing the cations Cu, Fe, Hg, Ag, Bi, Cr, Pd, Co, Ni, Zn, Si, Al and Li, the punicin-derived polyvinylpyridine, suspended in water, was adjusted to pH 2 by diluted hydrochloric acid, stirred with the aforementioned metal cation solution at room temperature in daylight over a period of 24 h, and filtered off.

In order to remove the cations of Cu, Fe, Hg, Ag, Bi, Pd, Co, Ni, Zn, Hg, Ag, Bi, and Pd from an aqueous solution containing the cations Cu, Fe, Hg, Ag, Bi, Cr, Pd, Co, Ni, Zn, Si, Al and Li, the punicin-derived polyvinylpyridine, suspended in water, was adjusted to pH 12 by diluted NaOH, stirred with the aforementioned metal cation solution at room temperature in daylight over a period of 24 h, and filtered off.

In order to remove the cations of Cu, Fe, Hg, Ag, Bi, Cr, and Pd from an aqueous solution containing the cations Cu, Fe, Hg, Ag, Bi, Cr, Pd, Co, Ni, Zn, Si, Al and Li, the 4,4'-bipyridine functionalized Merrifield resin, suspended in water, was adjusted to pH 8 by diluted NaOH, stirred with the aforementioned metal cation solution at room temperature under UV irradiation over a period of 24 h, and filtered off.

The present invention also refers to a polymerizable compound represented by formula (8):

D-E (8)

wherein D is represented by formula (9) or by formula (10): 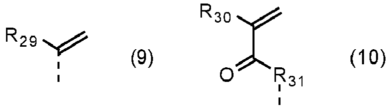
, wherein the dotted line represents the bond to E,
wherein R₂₉ = H or R₂₉ is a methyl group,
wherein R₃₀ = H or R₃₀ is a methyl group
wherein R₃₁ is O or NH,
wherein E is represented by formula (11) 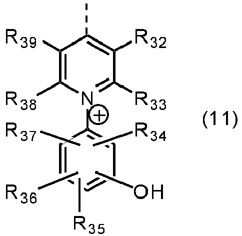
, wherein the dotted line represents the bond to D,
wherein R₃₂, R₃₃, R₃₄, R₃₅, R₃₆, R₃₇, R₃₈, R₃₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups.

The present invention encompasses vinyl monomers, e.g. (meth)acrylates, (meth)acrylamides, or styrenic monomers, being functionalized with punicin moieties. In case of poor conversions within the polymerization of these monomers, potentially due to a high steric demand, copolymerization with monomers (such a methyl acrylate in case of a punicin functionalized acrylate) is conceivable.

Furthermore, the inventors have surprisingly found that the monomeric punicines did not form characterizable complexes with metal cations (e.g. crystallizations did not occur). That is, for complexation of metal cations and/or metal-containing anions, the punicines apparently have to be bound to a polymer.

According to a preferred embodiment of the present invention, D is represented by formula (9) of claim 13 and R₂₉ = H.

This embodiment refers to vinyl monomers being functionalized with punicines. In a particularly preferred embodiment of this invention, the monomers have the following formula:

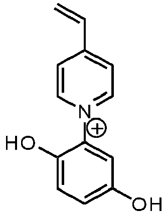

According to a preferred embodiment of the present invention, D is represented by formula (10) of claim 13, R₃₀ = H, and R₃₁ = O.

This embodiment refers to acrylate monomers being functionalized with punicines. In a particularly preferred embodiment of this invention, the monomers have the following formula:

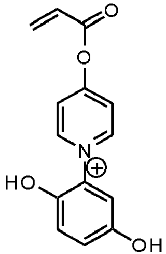

### Description of the Figures

Figure 1: Figure 1 shows the switchable properties of punicin depending on the environment.
Figure 2: Figure 2 shows that ylides of the hetarenium-carbanion type are related to punicines.
Figure 3: Figure 3 shows the molecular mechanisms causing the switchable properties of ylides.
Figures 4a to 4c: Figures 4a to 4c show the results of the adsorption tests, wherein Figure 4a contains a schematic representation of the polymers, i.e. polymer 1 and polymer 2, used for the adsorption tests.

### Examples

### 1. Synthesis of punicin monomers

The synthesis of punicin derivatives is described herein and also generally known to the skilled person and is described in the literature cited herein such as in literature references 6 to 15 as listed in the literature section at the end.

### 1.1 trans-N-(2',5'-Dihydroxyphenyl)-2-styrylpyridinium chloride

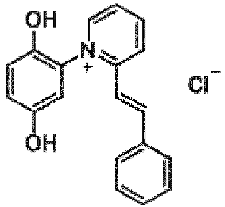

The synthesis of trans-N-(2',5'-Dihydroxyphenyl)-2-styrylpyridinium chloride is published in reference 8 (M. Albrecht, M. Gjikaj, A. Schmidt, Switchable pi-Complexes of Punicine Derivatives. Tetrahedron 2010, 66, 7149 - 7154.).

A sample of p-benzoquinone (5.4 g, 50 mmol) dissolved in 35 mL of glacial acetic acid was treated with 2-methylpyridine (4.9 mL, 50 mmol) and then stirred for 24 h at rt. The resulting precipitate was filtered off, dissolved in water, and precipitated again by addition of concentrated hydrochloric acid, yielding a complex of two molecules of N-(2',5'-dihydroxyphenyl)-2-methylpyridinium chloride and one molecule of hydroquinone. Yield: 3.31 g (57%) of a pale brownish solid; mp 203 - 206 °C. A sample of 672 mg (2.3 mmol) of this complex was dissolved in 30 mL of anhydrous methanol and then treated with benzaldehyde (0.25 mg, 2.5 mmol) and 10 drops of piperidine. The mixture was then heated at reflux temperature for 13 h, before the solvent was distilled off. The resulting residue was chromatographed, then dissolved in methanol and precipitated by the addition of chloroform. Yield: 235 mg (31%) of a yellow solid; dec 202 °C. ¹H NMR (200 MHz, DMSO-d₆): δ = 10.32 (br s, 1H), 9.81 (br s, 1H), 8.95 (d, J = 5.6 Hz, 1H), 8.73 (m, 2H), 8.12 (d, J =16.3 Hz, 1H), 8.03 (m, 1H), 7.44 (m, 5H), 7.08 (m, 3H), 6.74 (d, J = 16.3 Hz,1H) ppm; ¹³C NMR (50 MHz, DMSO-d₆): δ = 152.5, 150.4, 146.5, 145.8, 143.5, 142.7, 134.5, 130.9, 129.3, 127.9, 127.5, 125.4, 124.7, 119.7, 118.0, 117.2, 113.1 ppm; IR (KBr): 3029, 1615, 1561, 1528, 1499, 1447, 1354, 1268. HRESIMS: calcd for C₁₉H₁₆NO₂⁺: 290.1180. Found: 290.1173.

### 1.2 trans-N-(2',5 '-Dihydroxyphenyl)-4-styrylpyridinium chloride

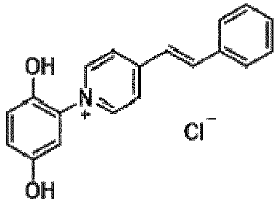

A mixture of N-(2',5'-dihydroxyphenyl)-4-methylpyridinium chloride (237 mg, 1 mmol), benzaldehyde (0.11 mL, 1.1 mmol) and three drops of piperidine in 10 mL of anhydrous methanol was heated at reflux temperature for 24 h. After evaporation to dryness, the residue was chromatographed and finally recrystallized from chloroform/MeOH. Yield: 154 mg (47%); dec 272 - 273 °C. ¹H NMR (DMSO-d₆): δ = 10.48 (br s, 1H), 9.78 (br s, 1H), 9.03 (d, J = 6.4 Hz, 2H), 8.35 (d, J = 6.4 Hz, 2H), 8.18 (d, J = 16.3 Hz, 1H), 7.80 (m, 2H), 7.50 (m, 3H), 7.66 (d, J = 16.3 Hz, 1H), 7.14 (d, J = 8.8 Hz, 1H), 7.07 (d, J = 2.6 Hz, 1H), 6.97 (dd, J = 8.8 Hz, J = 2.6 Hz, 1H) ppm; ¹³C NMR (DMSO-d₆): δ = 153.6, 150.4, 145.7, 142.7, 141.8, 135.2, 130.6, 129.6, 129.1, 128.3, 123.5, 123.4, 119.0, 118.1, 112.6 ppm; IR (KBr): 3057, 1614, 1507, 1455, 1339, 1270, 1189, 1119, 973, 825, 794, 767, 692 cm⁻¹. HRESIMS: calcd C₁₉H₁₆NO₂⁺: 290.1180. Found: 290.1181.

### 1.3. N-(2',5'-Dihydroxyphenyl)-4-vinylpyridinium chloride

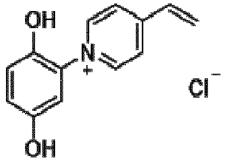

1,4-Benzoquinone (2.18 g, 20 mmol) was suspended in 15 ml of acetic acid and treated slowly with freshly distilled 4-vinylpyridine (2.17 ml, 20 mmol). The reaction mixture was mixed at 0 °C for 10 min, and then under reflux for 3 days at 100 °C. Then 8 ml of HCl (37%) was added. The reaction was stirred further for 2 h. Then the precipitate was filtered and washed with acetic acid. The resulting precipitate was collected by filtration and proved to be polymerized N-(2',5'-dihydroxyphenyl)-4-vinylpyridinium chloride, *i.e.* punicine-functionalized poly(4-vinyl)pyridine.

### 2. Synthesis of punicin and ylide functionalized polymers

### 2.1. N-(2',5'-Dihydroxyphenyl)-4-(4'-pyridine)-pyridinium chloride

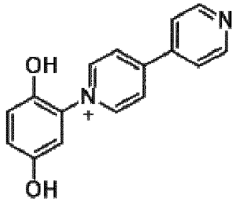

2.7 g (25.0 mmol) of p-benzoquinone were suspended in 8 mL of concentrated acetic acid and treated slowly with 3.9 g of 4,4'-bipyridine (25.0 mmol). The resulting dark mixture was diluted with 4 mL of water, heated and treated with 8 mL of 18% hydrochlorid acid. On cooling, a solid precipitated which was filtered off, recrystallized from water and dried in vacuo. Yield: 4.2 g (14.0 mmol; 56%) of a brown solid, mp. 128 °C. IR: 3423, 2580, 1632, 1605, 1511, 1209, 818 cm⁻¹. UV (MeOH): ¹H NMR: δ = 9.27 (d, J = 7.0 Hz, 2H), 8.90 (dd, J = 1.5 Hz, J = 4.6 Hz, 2H), 8.69 (d, J = 7.0 Hz, 2H), 8.10 (dd, J = 1.5 Hz, J = 4.6 Hz, 2H), 7.12 (d, J = 2.6 Hz, 1H), 7.07 (s, 1H), 7.00 (d, J = 2.6 Hz, 1H) ppm. ¹³C NMR: δ = 149.4, 147.8, 146.4, 144.9, 142.1, 125.8, 124.7, 117.6 ppm. ESIMS: m/z = 263 (M⁺, 20), 110 (75), 156 (100). Anal. Calcd. for C₁₆H₁₃ClN₂O₂ (300,07) x H₂O: C: 60.29; H: 4.74; N: 8.79. Found: C: 61.50; H: 4.66; N: 8.77.

### 2.2. Synthesis of punicine-functionalized poly(4-vinyl)pyridine

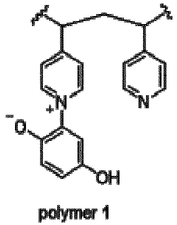

A dispersion of 4.0 g poly-(4-vinylpyridine) and 5.5 g of p-benzoquinone in 40 mL of glacial acetic acid was stirred overnight at room temperature. Afterwards the mixture was treated with 60 mL of concentrated HCl and 20 mL of distilled water, causing the color of the suspension to lighten significantly. The polymer was filtered off and washed with diluted hydrochloric acid, distilled water, methanol and acetone until the filtrate stayed colorless. The remaining solid was dried in vacuo, yielding 9,11 g of a yellow polymer consisting of structure elements as shown for polymer 1, decomp. 200 °C.

### 2.3 Synthesis of functionalized poly[1-(chloromethyl)-4-vinylbenzenes] (Merrifield resins)

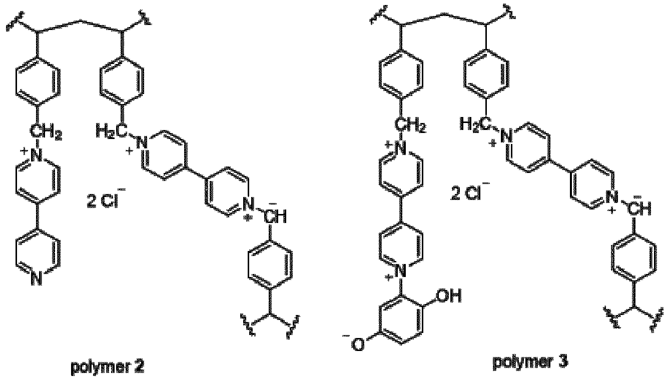

Poly[1-(chloromethyl)-4-vinylbenzene (3 g) was suspended in dioxane for 1 h. Then 4,4'-bipyridine (4.3 g, 27.6 mmol) was added. The suspension was stirred at reflux for 48 h. Then the yellow product (5.1 g) was collected by filtration and washed with dioxane. Recovery of the starting material showed that 1.5 g of the 4,4'-bipyridine had reacted to give a polymeric material consisting of structure elements as shown for polymer **2.** Then, a sample of 200 mg of the resulting resin was treated with p-benzoquinone (215 mg. 2 mmol) as suspension in glacial acetic acid (25 ml). The suspension was heated to 90 °C over a period of 1.5 h. During the reaction the color of the mixture changed from yellow to brown. After adding hydrochloric acid, the resulting solid was filtered off and subsequently washed with water and methanol. The reaction gives a dark violet solid consisting of structure elements as shown as polymer **3** (227 mg).

### 2.4 Synthesis of functionalized poly[1-(chloromethyl)-4-vinylbenzenes] without 4,4'-bipyridinium cross-linkers

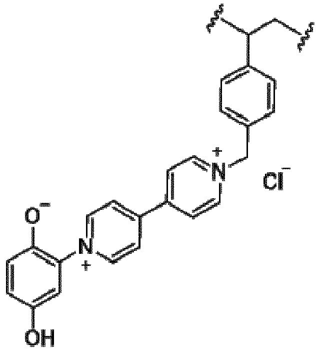

A sample of Merrifield resin (253 mg) was suspended in 25 mL of DMF and stirred over a period of 2 hours. Then N-(2',5 '-dihydroxyphenyl)-4(4'-pyridine)pyridinium chloride (190 mg, 0.6 mmol) and 1,8-tetramethylaminonaphthalene (proton sponge, 142 mg, 0.7 mmol) were added. The suspension was refluxed for 48 h. A dark violet solid (276 mg) formed which was filtered off and washed with diethylether.

### 3. Adsorption tests

Solution I, consisting of 0.4 mL of 1000 mg/L of each of the following salts in distilled water, Fe(NO₃)₂, Cu(NO₃)₂, Zn(NO₃)₂, Co(NO₃)₂, Ni(NO₃)₂, stabilized in 2.5% HNO₃, respectively, and Hg(NO₃)₂, stabilized by 10% HNO₃, and 27.6 mL of water was given to a sample of 200 mg of the polymer. The pH value was adjusted by diluted NaOH solution in water (1M or 5M) to pH 8 and pH 12, respectively.

Solution II, consisting of 0.4 mL of 1000 mg/L of each of the following salts in distilled water, Cd(NO₃)₂, Cr(NO₃)₃, AgNO₃, Pd(NO₃)₂, Bi(NO₃)₃, stabilized in 2.5% HNO₃, respectively, as well as H₃AsO₄ and 27.6 mL of water was given to a sample of 200 mg of the polymer. The pH value was adjusted by diluted NaOH solution in water (1M or 5M) to pH 8 and pH 12, respectively.

Solution III, consisting of 0.4 mL of 1000 mg/L of each of the following salts or compounds in distilled water, SiO₂ (dissolved in 2% NaOH), Al(NO₃)₃ (stabilized in 2.5% HNO₃), and LiNO₃ (stablized in 2.5% HNO₃), respectively, and 13.8 mL of water was given to a sample of 200 mg of the polymer. The pH value was adjusted by diluted NaOH solution in water (1M or 5M) to pH 8 and pH 12, respectively.

The suspensions consisting of the solutions I - III, respectively, plus the polymers, respectively, were shaken for 24 h at room temperature in room light, in the dark, or under irradiation with a UV-lamp at λ = 254 nm. During irradiation, the lamp was kept in a distance of 20 cm from the flasks. After filtration and treating the filter cake with distilled water to wash the polymer's surface, the collected aqueous phases of a total volume of 50 mL were examined by means of ICP-OES to determine the concentrations of the metal ions in the filtrate. Depending on the conditions, defined metal ions can efficiently be separated from others in the solution. Under variation of light scenario and pH value, the following results have been achieved:
- In the dark (< 40 lux) at pH 8, cations of Cu, Fe, Hg, Ag, Bi, Cr, and Pd can be removed from Co, Ni, Zn, Si, Al and Li employing the polymers 1 and 2, respectively, whereas polymer 2 also allows for the almost quantitative separation from Cd cations, and polymer 1 also removes 40% of the Cd.
- In daylight / artificial daylight (> 5000 lux; 3300-5300 K) at pH 8, polymer 1 removes more than 95% of Cu, Hg, Ag, Bi, Cr, Pd, approximately 90% of Fe and approximately 84% of Cd from Co, Ni, Zn, Si, Al and Li. Under these conditions, polymer 2 also removes 55% of Co, 77% of Ni, and 81% of Zn. The removal of Cd is improved on application of polymer II to 98% in comparison to polymer I under these conditions.
- Under UV irradiation at pH 8, polymer 1 separates Cu, Fe, Hg, Ag, Bi, Cr, and Pd quantitatively from Co, Zn, Si, Al, and Si, whereas Ni and As are removed by 81%, respectively, and Cd by 31%. Under these conditions, polymer 2 removes 50% of Ni, 44% of Zn, and 94% of Cd under these conditions.
- In daylight / artificial room light at pH 2, Hg, Ag, Bi, and Pd can be removed selectively and almost quantitatively from Co, Cu, Fe, Ni, Zn, As, Cd, Cr, Si, Al, and Li which remain almost quantitatively to minimum 94% (As) in the solution when polymer 1 or 2 are used.
- In daylight at pH 12, Co, Cu, Fe, Hg, Ni, Zn, Ag, Bi, Cd, Pd and Al can be removed quantitatively from As and Li on application of polymer I, whereas 88% of Cr, 18% of Si, and 46% of Al are removed. Under these conditions, polymer II also removes Al quantitatively.

These are examples of selectivities which can be adjusted by variation of the parameters light scenario and pH value:
- Similar to silver, the critical raw material bismuth is almost completely removed from the solutions and bound to the polymer in the dark (< 40 lux) and in daylight (> 5000 lux; 3300-5300 K) at pH values 2, 8 and 12.
- The critical raw material cobalt is complexed by the polymer 1 only in alkaline solution and can thus be separated from, for example, nickel at pH 8 under UV light.
- Zinc cations are not removed by polymer 2 at pH 8 in the dark, but are 81% removed in daylight, so separation from silver and other elements is possible by simply changing the light scenario. Recovery of the zinc can then be achieved by changing the parameters.
- Alkaline conditions (pH 12) cause complete removals of all cations except Al³⁺ and Li⁺, leaving the anion AsO₄³⁻ in solution as well as SiO₂.
- The gangue material SiO₂ is not removed at pH 8. However, its effective removal succeeds at pH 12 by the polymeric ylide (gray bar).
- Aluminum cations are not removed at pH 2 and pH 8. However, its complete removal and thus separation from the other cations succeeds through the polymeric ylide (gray bars) from alkaline solution. By changing the pH, the aluminum cations can be released again.
- The elements Pd, Cr, Cd, Bi, Ni, Ag, Fe, Cu can be completely separated as cations from SiO₂ and Al by selecting the adsorption material and adjusting the external parameters.

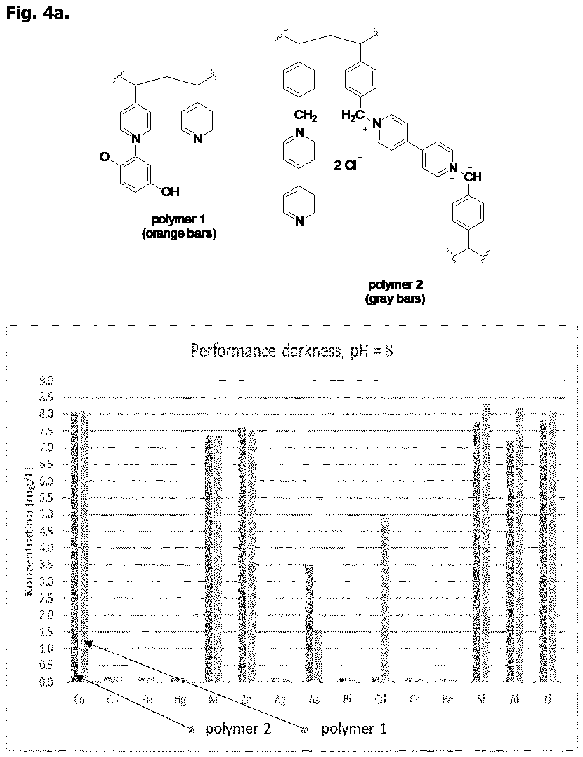

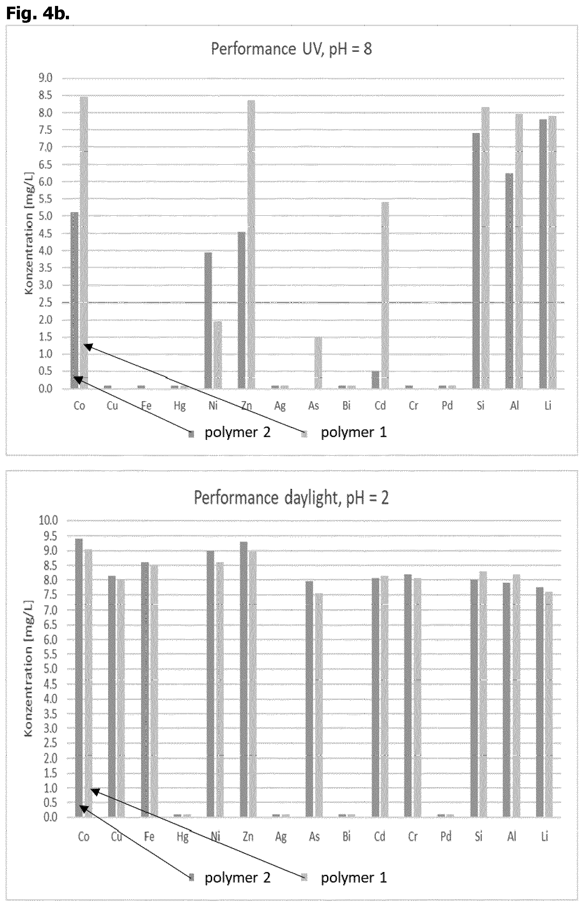

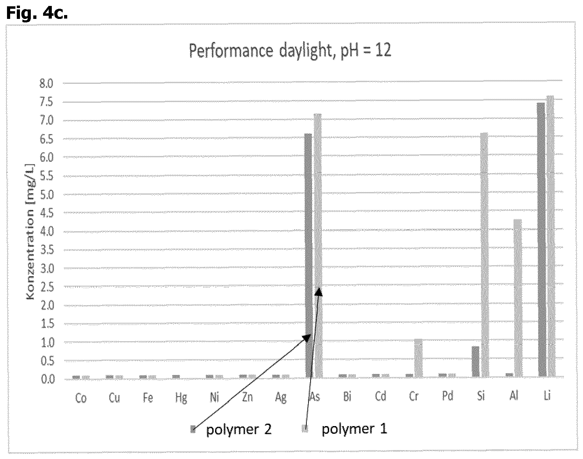

The results are also shown in Figures 4a to 4c.

In summary, the conditions such as pH and light scenario can be adjusted in such a way, that selective separations from complex mixtures of metal ions are possible.

### List of citations

1. M. Albrecht, M. Yulikov, T. Kohn, G. Jeschke, J. Adams, A. Schmidt, Pyridinium salts and ylides as partial structures of photoresponsive Merrifield resins. Journal of Materials Chemistry 2010, 20, 3025 - 3034.
2. Schmidt et al., Studies on photocatalytically active materials containing structure elements of a pyridinium alkaloid from Punica granatum. Journal of Materials Chemistry 2007, 17, 2793 - 2800.
3. Zhang et al., Sunlight-assisted tailoring of surface nanostructures on single-layer graphene nanosheets for highly efficient cation capture and high-flux desalination. Carbon 2020, 161, 674 - 684.
4. WO 1996011056 A1
5. Shibata et al., Flotation separation of SiC from wastes in the silicon wafer slicing process. Kagaku Kogaku Ronbunshu 2006, 32, 93 - 98.
6. A. Schmidt, T. Mordhorst, M. Nieger, Investigation of a betainic alkaloid from Punica granatum. Natural Product Research 2005, 19, 541 - 546.
7. C. F. Otto, M. Liu, C. Herzberger, J. C. Namyslo, M. Nieger, E. G. Hübner, F. Lederle, T. Freese A. Schmidt, Borane adducts of punicine and of its dehydroxy derivatives (pyridinium-1-yl)-2- and 3-phenolates. Tetrahedron 2020, 76, 131627.
8. M. Albrecht, M. Gjikaj, A. Schmidt, Switchable pi-Complexes of Punicine Derivatives. Tetrahedron 2010, 66, 7149 - 7154.
9. M. Albrecht, M. Yulikov, T. Kohn, G. Jeschke, J. Adams, A. Schmidt, Pyridinium Salts and Ylides as Partial Structures of Photoresponsive Merrifield Resins. J. Mater. Chem. 2010, 20, 3025 - 3034.
10. M. Albrecht, O. Schneider, A. Schmidt, Redox Active Donor-substituted Punicine Derivatives. Org. Biomol. Chem. 2009, 7, 1445 - 1453.
11. Schmidt, M. Albrecht, Photocatalytically Active Materials with Pyridinium-Enolate Partial Structures. Z. Naturforsch. 2008, 63b, 465 - 472.
12. Schmidt, M. Topp, T. Mordhorst, O. Schneider, Redoxactive Derivative of the Betaine-Alkaloid Punicin from Punica granatum. Synthesis and Cyclovoltammetry. Tetrahedron 2007, 63, 1842 - 1848.
13. H. Fleischhauer, L. Frormann, A. Schmidt, Vom Pflanzeninhaltsstoff zum Polymer. Neue Eigenschaften nach dem Vorbild der Natur. Teil 1. Int. Mag. Extrusion 2005, 5 (11), 50 - 51.
14. Schmidt, T. Mordhorst, H. Fleischhauer, G. Jeschke, Coupled Photocatalytic Electron-Transfers with Derivatives of a Betaine Alkaloid from Punica granatum. ARKIVOC 2005, X, 150 - 164.
15. Schmidt, T. Mordhorst, Conjugated, Cross-Conjugated, and Pseudo-Cross-Conjugated Derivatives of a Pyridinium Alkaloid from Punica granatum. ARKIVOC2003, XIV, 233 - 245.

## Claims

1. Use of a polymer as adsorption material, **characterised in that** the polymer comprises one or more of the moieties represented by formula (1):
A-B (1)
, wherein the moieties can be the same or different,
wherein the moieties are covalently bonded via A and/or B to the polymer backbone or other parts of the polymer;
wherein A is
a) an aromatic group being substituted with one or more OH- and/or SH-groups,
or
b) an aromatic group attached to B via a methylene group of the formula -[CH₂]- or a methylene carbanion group of the formula -[CH⁻]-, or
c) a 1,4-benzoquinone group or 1,4-naphthoquinone group being substituted in 2-position with the substituent being B and being substituted in 3-position with an OH group;
wherein B is
a pyridinium or benzoannelated pyridinium compound, wherein A is bonded to the nitrogen atom of the pyridinium or benzoannelated pyridinium compound.

2. The use according to claim 1, wherein A is represented by formulae (2), (3), (4) or (5): 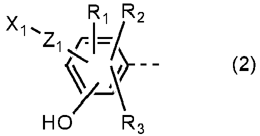 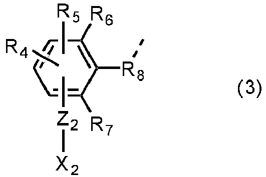 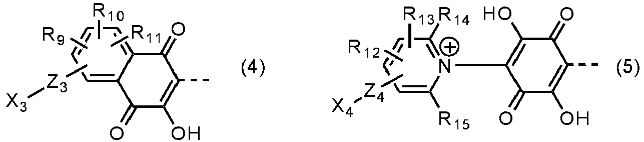
; wherein the dotted line represents the bond to B;
wherein R₁ is selected from: H, OH, SH, NH₂;
wherein R₂, R₃, R₄, R₅, R₆, R₇, R₉, R₁₀, R₁₁, R₁₂, R₁₃, R₁₄, R₁₅ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein R₈ = -[CH₂]- or R₈ = -[CH⁻]-;
wherein Z₁, Z₂, Z₃, Z₄ represents a single bond or a linker;
wherein X₁, X₂, X₃, X₄ can be the same as or different from R₂, R₃, R₄, R₅, R₆, R₇, R₉, R₁₀, R₁₁, R₁₂, R₁₃, R₁₄, R₁₅ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
or X₁, X₂, X₃, X₄ can be the polymer backbone.

3. The use according to claim 1 or 2, wherein B is represented by formula (6): 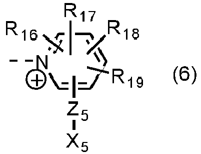
; wherein the dotted line represents the bond to A;
wherein R₁₆, R₁₇, R₁₈, R₁₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein Z₅ represents a single bond or a linker;
wherein X₅ can be the same as or different from R₁₆, R₁₇, R₁₈, R₁₉ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
or X₅ can be the polymer backbone of the polymer, wherein said polymer backbone may be the same as, or different from, the polymer backbone represented by X₁, X₂, X₃, X₄.

4. The use according to claim 2 or 3, wherein X₅ is the polymer backbone, and
a) Z₁, Z₂, Z₃, Z₄, Z₅ represent a single bond, and X₁, X₂, X₃, X₄ is H;
or
b) A is defined as in formula (3) of claim 2,
Z₂ represents a single bond, X₂ = X₅,
Z₅ is represented by formula (7) wherein the symbols B and X₅ have been inserted into formula (7): 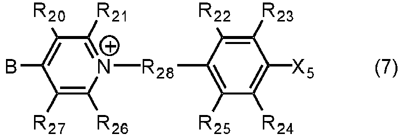
, wherein R₂₀, R₂₁, R₂₂, R₂₃, R₂₄, R₂₅, R₂₆, R₂₇ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
wherein R₂₈ = -[CH₂]- or R₂₈ = -[CH⁻]-,
wherein B is as defined in claim 3.

5. The use according to any of claims 2 to 4, wherein the polymer backbone is selected from the group consisting of saturated or unsaturated olefinic, styrenic, acrylic, methacrylic, acrylamide, methacrylamide, polyether, polyester, polyamide, polysiloxane polymer backbones or combinations thereof;
preferably wherein the polymer backbone is a saturated olefinic polymer backbone.

6. A metal complex or coordination compound comprising a metal-containing compound and a polymer as defined in any of claims 1 to 5.

7. The metal complex or coordination compound according to claim 6, wherein the metal-containing compound comprises a complex metal-containing anion, preferably AsO₄³⁻, CrO₄²⁻, VO₄³⁻, NbO₃⁻ and/or MnO₄⁻.

8. The metal complex or coordination compound according to claim 6 or 7, wherein the metal-containing compound comprises a metal cation selected from the group consisting of alkali metals, alkaline earth metals, transition metals, post-transition metals, lanthanides, actinides, or combinations thereof;
preferably selected from the group consisting of lithium, cobalt, copper, gold, iron, mercury, nickel, zinc, silver, platinum, bismuth, cadmium, chromium, palladium, ruthenium, aluminum, gallium, the rare earth metals, or combinations thereof.

9. A method for selective separation of different types of metal cations and/or complex metal-containing anions comprising the steps of:
a) providing an aqueous solution comprising different types of metal cations and/or metal-containing anions;
b) treating the solution of step a) with the polymer as defined in any of claims 1 to 5 to adsorb at least a portion of at least one type of said different types of metal cations and/or complex metal-containing anions, preferably by forming the metal complex or coordination compound as defined in any of claims 6 to 8;
c) separation of the polymer having adsorbed said at least one type of different types of metal cations and/or complex metal-containing anions from the aqueous solution, preferably by forming the metal complex or coordination compound as defined in any of claims 6 to 8.

10. The method according to claim 9, wherein in step a) the aqueous solution comprising different types of metal cations and/or metal-containing anions additionally contains silicate minerals as gangue materials, preferably wherein the silicate minerals having the chemical formula SiO₂.

11. The method according to claim 9 or 10, wherein step b) and step c) further comprising
i) performing light irradiation or light exclusion to switch the polymer; and/or
ii) increasing or decreasing the pH of the aqueous solution to switch the polymer.

12. The method according to claim 11, wherein the light irradiation or light exclusion and/or the pH is set depending on the type of metal cations and/or metal-containing anions to be adsorbed by the polymer.

13. A polymerizable compound represented by formula (8):
D-E (8)
wherein D is represented by formula (9) or by formula (10): 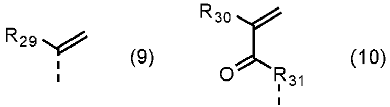
, wherein the dotted line represents the bond to E,
wherein R₂₉ = H or R₂₉ is a methyl group,
wherein R₃₀ = H or R₃₀ is a methyl group
wherein R₃₁ is O or NH,
wherein E is represented by formula (11) 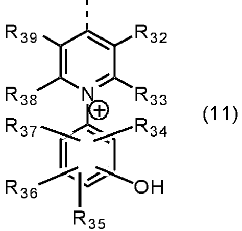
, wherein the dotted line represents the bond to D,
wherein R₃₂, R₃₃, R₃₄, R₃₅, R₃₆, R₃₇, R₃₈, R₃₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups.

14. The compound according to claim 13, wherein D is represented by formula (9) of claim 13 and R₂₉ = H.

15. The compound according to claim 13, wherein D is represented by formula (10) of claim 13, R₃₀ = H, and R₃₁ = O.

## Amended claims

### Amended claims in accordance with Rule 137(2) EPC.

1. Use of a polymer as adsorption material, **characterised in that** the polymer comprises one or more of the moieties represented by formula (1):
A-B (1)
, wherein the moieties can be the same or different,
wherein the moieties are covalently bonded via A and/or B to the polymer backbone or other parts of the polymer;
wherein A is
a) an aromatic group being substituted with one or more OH- and/or SH-groups, or
b) an aromatic group attached to B via a methylene group of the formula -[CH₂]-or a methylene carbanion group of the formula -[CH⁻]-, or
c) a 1,4-benzoquinone group or 1,4-naphthoquinone group being substituted in 2-position with the substituent being B and being substituted in 3-position with an OH group;
wherein B is
a pyridinium or benzoannelated pyridinium compound, wherein A is bonded to the nitrogen atom of the pyridinium or benzoannelated pyridinium compound.

2. The use according to claim 1, wherein A is represented by formulae (2), (3), (4) or (5): 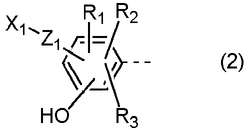 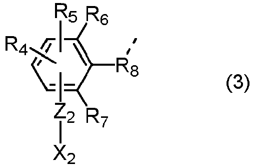 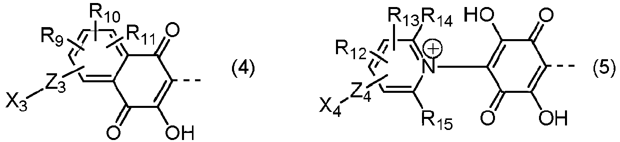
; wherein the dotted line represents the bond to B;
wherein R₁ is selected from: H, OH, SH, NH₂;
wherein R₂, R₃, R₄, R₅, R₆, R₇, R₉, R₁₀, R₁₁, R₁₂, R₁₃, R₁₄, R₁₅ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein R₈ = -[CH₂]- or R₈ = -[CH⁻]-;
wherein Z₁, Z₂, Z₃, Z₄ represents a single bond or a linker;
wherein X₁, X₂, X₃, X₄ can be the same as or different from R₂, R₃, R₄, R₅, R₆, R₇, R₉, R₁₀, R₁₁, R₁₂, R₁₃, R₁₄, R₁₅ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
or X₁, X₂, X₃, X₄ can be the polymer backbone.

3. The use according to claim 1 or 2, wherein B is represented by formula (6): 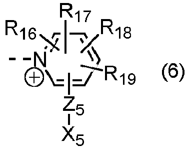
; wherein the dotted line represents the bond to A;
wherein R₁₆, R₁₇, R₁₈, R₁₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups;
wherein Z₅ represents a single bond or a linker;
wherein X₅ can be the same as or different from R₁₆, R₁₇, R₁₈, R₁₉ and are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
or X₅ can be the polymer backbone of the polymer, wherein said polymer backbone may be the same as, or different from, the polymer backbone represented by X₁, X₂, X₃, X₄.

4. The use according to claim 2 or 3, wherein X₅ is the polymer backbone, and
a) Z₁, Z₂, Z₃, Z₄, Z₅ represent a single bond, and X₁, X₂, X₃, X₄ is H; or
b) A is defined as in formula (3) of claim 2,
Z₂ represents a single bond, X₂ = X₅,
Z₅ is represented by formula (7) wherein the symbols B and X₅ have been inserted into formula (7): 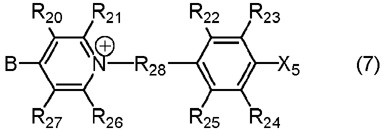
, wherein R₂₀, R₂₁, R₂₂, R₂₃, R₂₄, R₂₅, R₂₆, R₂₇ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups,
wherein R₂₈ = -[CH₂]- or R₂₈ = -[CH⁻]-,
wherein B is as defined in claim 3.

5. The use according to any of claims 2 to 4, wherein the polymer backbone is selected from the group consisting of saturated or unsaturated olefinic, styrenic, acrylic, methacrylic, acrylamide, methacrylamide, polyether, polyester, polyamide, polysiloxane polymer backbones or combinations thereof;
preferably wherein the polymer backbone is a saturated olefinic polymer backbone.

6. A metal complex or coordination compound comprising a metal-containing compound and a polymer comprising one or more of the moieties represented by formula (1):
A-B (1)
, wherein the moieties can be the same or different,
wherein the moieties are covalently bonded via A and/or B to the polymer backbone or other parts of the polymer;
wherein A is
a) an aromatic group being substituted with one or more OH- and/or SH-groups, or
b) an aromatic group attached to B via a methylene group of the formula -[CH₂]-or a methylene carbanion group of the formula -[CH⁻]-, or
c) a 1,4-benzoquinone group or 1,4-naphthoquinone group being substituted in 2-position with the substituent being B and being substituted in 3-position with an OH group;
wherein B is
a pyridinium or benzoannelated pyridinium compound, wherein A is bonded to the nitrogen atom of the pyridinium or benzoannelated pyridinium compound; wherein the metal-containing compound and the polymer form the metal complex or coordination compound.

7. The metal complex or coordination compound according to claim 6, wherein the metal-containing compound comprises a complex metal-containing anion, preferably AsO₄³⁻, CrO₄²⁻, VO₄³⁻, NbO₃⁻ and/or MnO₄⁻.

8. The metal complex or coordination compound according to claim 6 or 7, wherein the metal-containing compound comprises a metal cation selected from the group consisting of alkali metals, alkaline earth metals, transition metals, post-transition metals, lanthanides, actinides, or combinations thereof; preferably selected from the group consisting of lithium, cobalt, copper, gold, iron, mercury, nickel, zinc, silver, platinum, bismuth, cadmium, chromium, palladium, ruthenium, aluminum, gallium, the rare earth metals, or combinations thereof.

9. A method for selective separation of different types of metal cations and/or complex metal-containing anions comprising the steps of:
a) providing an aqueous solution comprising different types of metal cations and/or metal-containing anions;
b) treating the solution of step a) with a polymer comprising one or more of the moieties represented by formula (1):
A-B (1)
, wherein the moieties can be the same or different,
wherein the moieties are covalently bonded via A and/or B to the polymer backbone or other parts of the polymer; wherein A is
a) an aromatic group being substituted with one or more OH- and/or SH-groups, or
b) an aromatic group attached to B via a methylene group of the formula -[CH₂]-or a methylene carbanion group of the formula -[CH⁻]-, or
c) a 1,4-benzoquinone group or 1,4-naphthoquinone group being substituted in 2-position with the substituent being B and being substituted in 3-position with an OH group;
wherein B is
a pyridinium or benzoannelated pyridinium compound, wherein A is bonded to the nitrogen atom of the pyridinium or benzoannelated pyridinium compound, to adsorb at least a portion of at least one type of said different types of metal cations and/or complex metal-containing anions, preferably by forming the metal complex or coordination compound as defined in any of claims 6 to 8;
c) separation of the polymer having adsorbed said at least one type of different types of metal cations and/or complex metal-containing anions from the aqueous solution, preferably by forming the metal complex or coordination compound as defined in any of claims 6 to 8.

10. The method according to claim 9, wherein in step a) the aqueous solution comprising different types of metal cations and/or metal-containing anions additionally contains silicate minerals as gangue materials, preferably wherein the silicate minerals having the chemical formula SiOz.

11. The method according to claim 9 or 10, wherein step b) and step c) further comprising
i) performing light irradiation to form the radical forms of the one or more of the moieties defined in claim 9 or light exclusion to form the non-radical forms of the one or more of the moieties defined in claim 9 to switch the polymer; and/or
ii) increasing the pH of the aqueous solution to deprotonate the one or more of the moieties defined in claim 9 or decreasing the pH of the aqueous solution to protonate the one or more of the moieties defined in claim 9 to switch the polymer.

12. The method according to claim 11, wherein the light irradiation or light exclusion and/or the pH is set depending on the type of metal cations and/or metal-containing anions to be adsorbed by the polymer.

13. A polymerizable compound represented by formula (8):
D-E (8)
wherein D is represented by formula (9) or by formula (10): 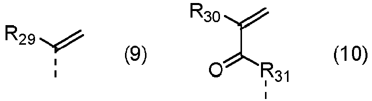
, wherein the dotted line represents the bond to E,
wherein R₂₉ = H or R₂₉ is a methyl group,
wherein R₃₀ = H or R₃₀ is a methyl group
wherein R₃₁ is O or NH,
wherein E is represented by formula (11) 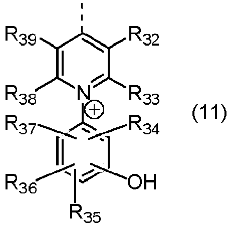
, wherein the dotted line represents the bond to D,
wherein R₃₂, R₃₃, R₃₄, R₃₅, R₃₆, R₃₇, R₃₈, R₃₉ are independently selected from the group consisting of: H, OH, NH₂, SH, CN, C(O)NH₂, C(O)H, C(O)OH, R^{k}, SR^{k}, OR^{k}, N(R^{k})(R^{L}), C(O)R^{k}, C(O)OR^{k}, C(O)N(R^{L})R^{k},
wherein R^{k} and R^{L} are independently selected from H and substituted or unsubstituted C₁₋₄ alkyl, substituted or unsubstituted C₁₋₄ heteroalkyl, substituted or unsubstituted C₆₋₁₄ aryl or substituted or unsubstituted C₄₋₁₂ heteroaryl groups, two or more of R^{k} and R^{L} optionally form with each other one or more substituted or unsubstituted C₆₋₁₄ aryl or substituted or unsubstituted C₄₋₁₂ heteroaryl groups.

14. The compound according to claim 13, wherein D is represented by formula (9) of claim 13 and R₂₉ = H.

15. The compound according to claim 13, wherein D is represented by formula (10) of claim 13, R₃₀ = H, and R₃₁ = O.
